# EUROPÄISCHE PATENTANMELDUNG

(11) **EP 1 505 374 A1**
(43) Veröffentlichungstag der Anmeldung: **09.02.2005**
(21) Anmeldenummer: 03018165.5
(22) Anmeldetag: 08.08.2003
(51) Int. Cl.: G01H 1/00

(54) **Verfahren und Vorrichtung zur Störungsermittlung durch Ermittlung des Schwingungsverhaltens einer Leitschaufel**

(71) Anmelder: SIEMENS AKTIENGESELLSCHAFT, 80333 München (DE)
(72) Erfinder: Beutin, Matthias, 46446 Emmerich (DE); Dehnen, Jan, 47279 Duisburg (DE); Fischer, Christof, 45468 Mülheim (DE); Oechsner, Matthias, Dr., 45481 Mülheim A.D. Ruhr (DE); Stammen, Wolfgang, 46119 Oberhausen (DE); Woditschka, Frank, 47229 Duisburg (DE)

(57) **Zusammenfassung**

Die Erfindung betrifft ein Verfahren zur Ermittlung von Störungen in einer Laufschaufelreihe, wobei das Schwingungsverhalten mindestens einer Laufschaufel (1) der Laufschaufelreihe über berührungslose optische oder induktive Methoden ermittelt wird und aus den beobachteten Schwingungsverhalten einer jeweiligen Frequenzantwort einer Laufschaufel (1) und dem Vergleich mit einer Referenzfrequenzantwort auf eine Störung geschlossen wird.

## Beschreibung

Die Erfindung betrifft ein Verfahren zur Ermittlung von Störungen in einer Laufschaufelreihe, wobei das Schwingungsverhalten mindestens einer Leitschaufel der Leitschaufelreihe ermittelt wird. Die Erfindung betrifft ebenso eine Vorrichtung zur Ermittlung von Störungen in einer Laufschaufelreihe, wobei die Vorrichtung Sensoren zum Messen von Schwingungen von Laufschaufeln als Messsignal aufweist und das Messsignal an eine Auswerteeinheit weitergeleitet wird.

Über berührungslose optische oder induktive Messmethoden kann das Schwingungsverhalten einer Turbinenlaufschaufelreihe während des Betriebes untersucht werden. Ein Monitorsystem zur Darstellung von Schwingungszuständen einer Vielzahl von Schaufeln auf einem rotierenden Laufrad in einer Turbomaschine ist in dem Dokument WO 95/03530 A1 dargestellt. Dabei wird das Schwingungsverhalten einer Vielzahl von Schaufeln über zwei Sensoren und einen Pulsgeber ermittelt und eine Störungsnachricht abgegeben.

In dem Dokument WO 95/27183 A1 wird ein nicht invasives Verfahren und eine Vorrichtung zur Feststellung der Resonanzbedingungen von Bauelementen einer rotierenden Maschine mit Vorhersage von Bauelementfehlern durch Änderung dieser Bedingungen beschrieben. Hierbei wird die Resonanzfrequenz einer Welle einer Maschine ermittelt und ausgewertet. Man geht hierbei davon aus, dass eine Störung an einer Turbinenschaufel die Resonanzfrequenz einer Welle ändert. Über die Ermittlung der Resonanzfrequenz der Welle und deren Änderung wird auf eine Störung zurückgeschlossen.

In dem Dokument WO 95/35484 A1 wird ein Verfahren zum Überwachen von Turbinenschaufelschwingungen mittels Mikrowellen vorgestellt.

Ebenso sind Verfahren zur Schwingungsmessung von Turbinenschaufeln mittels Dehnungsmessstreifen bekannt.

Während des Betriebes einer Gas- oder Dampfturbine treten unter Umständen durch zyklische, dynamische oder stationäre Belastungen Defekte in den Turbinenlaufschaufeln auf. Durch rechtzeitiges Erkennen sich anbahnender Störungen kann ein größerer Turbinenschaden verhindert werden.

Aufgabe der vorliegenden Erfindung ist es, ein Verfahren und eine Vorrichtung zur Ermittlung von Störungen in einer Laufschaufelreihe anzugeben.

Die auf das Verfahren hin gerichtete Aufgabe wird gelöst durch ein Verfahren zur Ermittlung von Störungen in einer Laufschaufelreihe, wobei das Schwingungsverhalten mindestens einer Laufschaufel der Laufschaufelreihe ermittelt wird, wobei aus dem beobachteten Schwingungsverhalten eine jeweilige Frequenzantwort der Laufschaufel ermittelt wird und durch einen Vergleich mit einer Referenzfrequenzantwort auf eine Störung geschlossen wird.

Die auf die Vorrichtung hin gerichtete Aufgabe wird gelöst durch eine Vorrichtung zur Ermittlung von Störungen in einer Laufschaufelreihe, wobei die Vorrichtung Sensoren zum Messen von Schwingungen von mindestens einer Laufschaufel als Messsignal umfasst und das Messsignal an eine Auswerteeinheit weitergeleitet wird, wobei die Auswerteeinheit ausgebildet ist zum Ermitteln einer jeweiligen Frequenzantwort und die Auswerteeinheit ausgebildet ist zum Vergleichen der Frequenzantwort mit einer Referenzfrequenzantwort.

Sowohl das Verfahren als auch die Vorrichtung können für eine einzelne Laufschaufel oder auch eine Laufschaufelreihe eingesetzt werden.

Der Vorteil der Erfindung ist unter anderem darin zu sehen, dass frühzeitig ein Defekt einer Laufschaufel über die Änderung der Eigenfrequenz ermittelt werden kann.
Vorteilhafterweise entspricht die Referenzfrequenzantwort einer zeitlich vorangegangenen Frequenzantwort. Ein Defekt, der zu einer geänderten Frequenzantwort führt, wird dadurch leicht erkannt.

Vorteilhafterweise entspricht die Referenzfrequenzantwort dem Ergebnis einer Modellrechnung. Hierbei wird in einer Modellrechnung die Frequenzantwort einer defekten Laufschaufel ermittelt und als Referenzfrequenzantwort eingesetzt. Dadurch wird die Art eines Defektes erkannt.

In einer weiteren vorteilhaften Weiterbildung wird die Referenzfrequenzantwort der Laufschaufel zunächst im störungsfreien Zustand ermittelt und mit Frequenzantworten während eines bestimmungsgemäßen Betriebes verglichen. Dadurch werden Laufschaufeleigenschaften, die einen Einfluss auf Frequenzantworten haben, berücksichtigt.

In einer vorteilhaften Weiterbildung wird das Schwingungsverhalten der jeweiligen Laufschaufel über berührungslose optische oder induktive Methoden ermittelt. Dadurch wird eine Messmethode eingesetzt, die keinen Einfluss auf das Schwingungsverhalten der Laufschaufeln hat. Eine Wechselwirkung zwischen den Sensoren, die bei den optischen oder induktiven Messmethoden eingesetzt werden und den Laufschaufeln findet kaum statt.

Anhand der nachfolgenden Beschreibung werden Ausführungsbeispiele der Erfindung unter Bezugnahme auf die Zeichnungen noch näher erläutert.

Dabei zeigt:

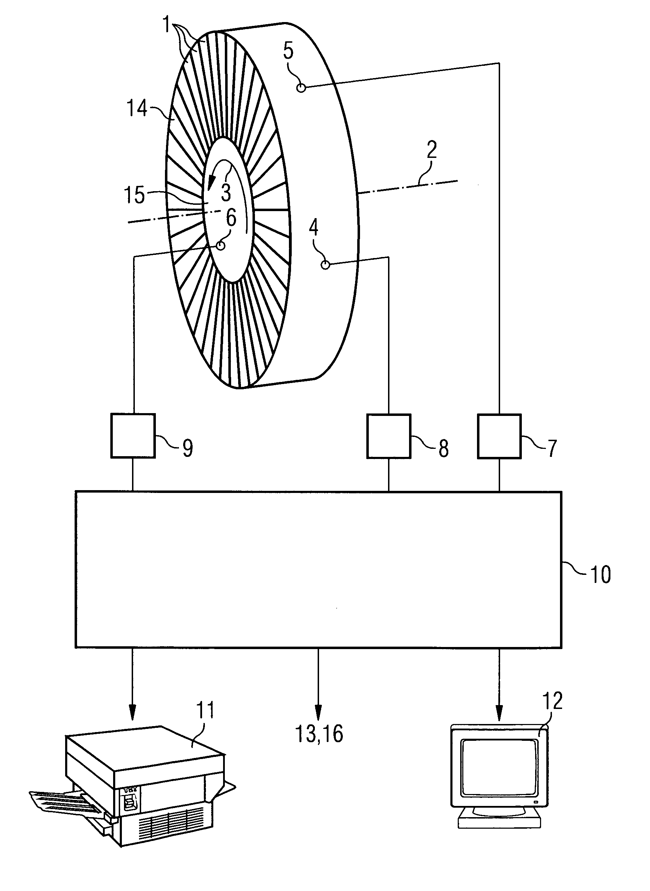

- Figur 1: eine schematische Darstellung einer Mess- und Auswerteanordnung.

In Figur 1 ist eine Mess- und Auswerteanordnung dargestellt, mit der Störungen in einer Turbinenschaufelreihe frühzeitig erkannt werden können. Eine Laufschaufel 1 dreht sich um eine Drehachse 2 in die durch einen Pfeil 3 angegebene Richtung. Die Laufschaufel 1 ist in nicht näher dargestellter Weise an einem um die Drehachse 2 drehbar gelagerten Rotor angebracht. An einer geeigneten Stelle der Laufschaufel 1 werden Sensoren 4 und 5 angebracht. Da die größten Amplituden einer Laufschaufelschwingung an einer Laufschaufelspitze 14 zu erwarten sind, sollten die Sensoren 4 und 5 im Bereich der Laufschaufelspitze 14 angebracht werden. Ein Sensor 6 ist auf dem Rotor 15 angebracht und liefert pro Umlaufperiode ein Triggersignal zu einer Empfangseinheit 9. Die Sensoren 4 und 5 liefern kontinuierlich Messsignale, die jeweils an eine Empfangseinheit 7 bzw. 8 weitergeleitet werden. Die Sensoren 4 und 5 können entweder optische oder induktiv wirkende Sensoren sein. Es können auch anders wirkende Sensoren eingesetzt werden. In den Empfangseinheiten 7, 8 und 9 werden die jeweiligen Signale der Sensoren 4, 5 und 6 vorverarbeitet, wobei gegebenenfalls ein Rauschen rausgefiltert und die bereinigten Signale 4, 5 und 6 an eine Auswerteeinheit 10 weitergeleitet wird. Die Sensoren 4, 5 und 6 sind derart angebracht, dass sie das Schwingungsverhalten der jeweiligen Laufschaufel 1 ermitteln kann.

In der Auswerteeinheit 10 werden die Signale der Sensoren 4, 5 in eine Frequenzantwort umgewandelt. Die Umwandlung kann durch Fourier-Transformation erfolgen. Die Frequenzantwort kann die Eigenfrequenz der Laufschaufel sein. Mit der vorgenannten Messeinrichtung kann mittels der Sensoren 4, 5 und 6 die Frequenzantwort der Laufschaufel 1 im Betrieb ermittelt werden.

Des weiteren wird in der Auswerteeinheit 10 eine Referenzfrequenzantwort abrufbar gespeichert. Die Referenzfrequenzantwort ist eine zeitlich vorangegangene ermittelte Frequenzantwort. Die Frequenzantwort wird mit der Referenzfrequenzantwort in der Auswerteeinheit 10 verglichen.

In einer alternativen Ausführungsform wird die Referenzfrequenzantwort aus einer Modellrechnung ermittelt.
Mittels separater Modellrechnungen, wie z.B. der Finite Elemente Methode (FEM) kann das Schwingungsverhalten und damit die Frequenzantwort einer Laufschaufel 1 rechnerisch ermittelt werden. Die Frequenzantwort wird als Referenzfrequenzantwort eingesetzt.

Vorzugsweise wird die Frequenzantwort einer defekten Laufschaufel 1 mittels der FEM ermittelt. Die Frequenzantwort wird mit der Referenzfrequenzantwort in der Auswerteeinheit 10 verglichen.

In einer weiteren Ausführungsform wird die Referenzfrequenzantwort aus einer Frequenzantwort während eines störungsfreien und bestimmungsgemäßen Betriebes ermittelt. Es sollte hierbei durch andere Prüfmethoden festgestellt werden, dass die Laufschaufel störungsfrei bzw. defektfrei während der Ermittlung der Referenzfrequenzantwort war. Die Frequenzantwort wird mit der Referenzfrequenzantwort in der Auswerteeinheit 10 verglichen.

Tritt eine Störung der Laufschaufel 1 in Form eines Defektes auf, so hat dies unter anderem folgende Auswirkungen auf das Schwingungsverhalten der Laufschaufel 1. Die Folge ist unter anderem: die Frequenzantwort ändert sich.

Zumindest drei Arten von Veränderungen in der Laufschaufel 1 verursachen Veränderungen in der Frequenzantwort. Chemische und metallurgische Veränderungen können eine Versteifung bewirken, die ihrerseits den Wert der Frequenzantwort erhöht.

Risse und Korrosion von Laufschaufeln veranlassen eine Verminderung des Wertes der Frequenzantwort. Eine Materialabspaltung eines Teilstücks der Laufschaufel führt ebenfalls zu einer Änderung der Frequenzantwort. Liefert der Vergleich zwischen den berechneten und den über die Sensoren 4, 5 und 6 ermittelten Frequenzantworten eine signifikante Änderung, so wird dies als Störung identifiziert. Mit anderen Worten: Ist die Differenz zwischen den berechneten und den über die Sensoren 4, 5 und 6 ermittelten Frequenzantworten größer als ein vorgebbarer Schwellwert, wird eine Störung gemeldet.

Mittels der FEM können Frequenzantworten von gestörten Laufschaufeln berechnet werden. Dabei wird auch eine Struktur einer gestörten bzw. beschädigten Laufschaufel berücksichtigt und deren Frequenzantwort untersucht. Für die verschiedenen Störungen, wie z. B. gerissene oder geplatzte Laufschaufeln existieren auch jeweils verschiedene Frequenzantworten. Man erhält somit sozusagen eine Datenbank an Frequenzantworten, die als Referenzfrequenzantworten gespeichert werden, kombiniert mit einem Schwingungsverhalten während einer Störung.

Werden signifikante Änderungen ermittelt, wird von der Auswerteeinheit eine Meldung abgesetzt. Diese Meldung kann entweder an einen Drucker 11 oder einen Monitor 12 oder sonst irgendwelche Warneinheiten wie z.B. eine Signallampe 13 oder eine Signalhupe 16 weitergeleitet werden. Der Vorteil der Erfindung ist unter anderem darin zu sehen, dass ein verlässliches automatisches Verfahren zur Vorhersage von Bauteilversagen vorgestellt wird. Dies erfüllt mehrere Zwecke.

Erstens kann das rotierende Maschinensystem, hier eine Dampfoder Gasturbine, in fortlaufendem Betrieb mit geringster störungsbedingter Stillstandszeit für die Reparatur nach dem Versagen angehalten werden, was üblicherweise mehr Zeit verbraucht als der Ersatz eines fehlerhaften Teils vor dem verhängnisvollen Schadensfall, insbesondere wenn solch ein Versagen zusätzlich zu dem schadhaften Teil zu Schäden an anderen Bauteilen führt.

Des weiteren wird zusätzliche Stillstandszeit vermieden, die sonst für außerplanmäßige Überprüfungen aufgewendet werden müsste, um Bauteile auf Risse zu prüfen und zu testen, um Versagen, bevor es auftritt, vorherzusehen. Des weiteren wird Stehzeit gespart, die für das Bestellen und Warten auf teure Bauteile, die nicht auf Lager gelegt werden, eingesetzt werden müsste.

## Patentansprüche

1. Verfahren zur Ermittlung von Störungen in einer Laufschaufelreihe, wobei das Schwingungsverhalten mindestens einer Laufschaufel (1) der Laufschaufelreihe ermittelt wird,
**dadurch gekennzeichnet, dass**
aus dem beobachteten Schwingungsverhalten eine jeweilige Frequenzantwort der Laufschaufel (1) ermittelt wird und durch einen Vergleich mit einer Referenzfrequenzantwort auf eine Störung geschlossen wird.

2. Verfahren nach Anspruch 1,
**dadurch gekennzeichnet, dass**
die Referenzfrequenzantwort einer zeitlich vorangegangenen Frequenzantwort entspricht.

3. Verfahren nach Anspruch 1,
**dadurch gekennzeichnet, dass**
die Referenzfrequenzantwort einem Ergebnis einer Modellrechnung entspricht.

4. Verfahren nach Anspruch 1,
**dadurch gekennzeichnet, dass**
die Referenzfrequenzantwort im störungsfreien Zustand ermittelt und mit Frequenzantworten während des Betriebes verglichen wird.

5. Verfahren nach einem der Ansprüche 1 bis 4,
**dadurch gekennzeichnet, dass**
die Schwingungsverhalten der jeweiligen Laufschaufeln (1) über berührungslose optische Methoden ermittelt werden.

6. Verfahren nach einem der Ansprüche 1 bis 5,
**dadurch gekennzeichnet, dass**
die Schwingungsverhalten der jeweiligen Laufschaufeln (1) über berührungslose induktive Methoden ermittelt werden.

7. Vorrichtung zur Ermittlung von Störungen in einer Laufschaufelreihe, welche Sensoren (4, 5, 6) zum Messen eines Schwingungsverhaltens mindestens einer Laufschaufel (1) als Messsignal umfasst und das Messsignal an eine Auswerteeinheit (10) weitergeleitet wird,
**dadurch gekennzeichnet, dass**
die Auswerteeinheit (10) ausgebildet ist zum Ermitteln einer jeweiligen Frequenzantwort der Laufschaufel (1) aus dem beobachtetem Schwingungsverhalten und die Auswerteeinheit (10) ausgebildet ist zum Erkennen einer Störung aus einer Änderung der Frequenzantwort und die Auswerteeinheit (10) ausgebildet ist zum Vergleichen der Frequenzantwort mit einer Referenzfrequenzantwort.

8. Vorrichtung nach Anspruch 7,
**dadurch gekennzeichnet, dass**
die Auswerteeinheit (10) ausgebildet ist zum Ermitteln einer Referenzfrequenzantwort, die einer zeitlich vorangegangenen Frequenzantwort entspricht.

9. Vorrichtung nach Anspruch 7,
**dadurch gekennzeichnet, dass**
die Auswerteeinheit (10) ausgebildet ist zum Ermitteln einer Referenzfrequenzantwort, die einem Ergebnis einer Modellrechnung entspricht.
